# EUROPÄISCHE PATENTSCHRIFT

(11) **EP 3 755 495 B1**
(45) Veröffentlichungstag und Bekanntmachung des Hinweises auf die Patenterteilung: **11.08.2021**
(21) Anmeldenummer: 18707349.9
(22) Anmeldetag: 23.02.2018
(51) Int. Cl.: B23P 19/06, B25B 21/00, B25B 23/14

(54) **VIELFACHSCHRAUBWERKZEUG**
MULTIPLE SCREWDRIVER
OUTIL DE VISSAGE MULTIPLE

(43) Veröffentlichungstag der Anmeldung: 30.12.2020
(73) Patentinhaber: Heico Befestigungstechnik Gmbh, 59469 Ense-Niederense (DE)
(72) Erfinder: VORNWEG, Stefan, 59469 Ense-Niederense (DE)
(74) Vertreter: Haverkamp, Jens
(86) Internationale Anmeldenummer: PCT/EP2018/054509
(87) Internationale Veröffentlichungsnummer: WO 2019/161910

(56) Entgegenhaltungen:
- EP-A1- 2 233 249
- WO-A2-2009/135201
- US-A1- 2014 245 869

## Beschreibung

Die Erfindung betrifft ein Vielfachschraubwerkzeug mit mehreren um ein Zentrum angeordneten, endseitig mit jeweils einem Spannwerkzeug bestückbaren oder bestückten Antriebsspindeln und einem jeder Antriebsspindel zugeordneten, mittels eines hydraulischen Kolbenantriebs angetriebenen Ratschenantrieb zum Antreiben der Antriebsspindeln. Ein solches Vielfachschraubwerkzeug ist aus EP 2 288 476 B1 bekannt.

Vielfachschraubwerkzeuge dienen dem Zweck, mit einem einzigen Schraubvorgang eine Mehrzahl an Schraubverbindungen zu spannen und somit beispielsweise Bolzen, die in einer Ringanordnung angeordnet sind, einzuschrauben oder auch zu lösen. Das gleichzeitige Spannen einer Mehrzahl von Schraubverbindungen führt nicht nur zu einer Verkürzung der zum Spannen mehrerer Schraubverbindungen ansonsten benötigten Zeit. Beim Spannen einzelner Schraubverbindungen, die ringförmig um ein Zentrum angeordnet sind, ist zudem darauf zu achten, dass die miteinander zu verspannenden Bauteile nicht verkanten, weshalb die Schraubverbindungen gemäß einem vorgegebenen Spannmuster gespannt werden müssen. Wird dieses nicht eingehalten, besteht die Gefahr, dass ein aus mehreren Schraubverbindungen bestehender Verbund nicht ordnungsgemäß gespannt wird.

Vielfachschraubwerkzeuge werden beispielsweise zum Verbinden von Steigrohren bei Erdöl oder Brunnenbohrungen verwendet. Diese Rohre verfügen an ihren Enden jeweils über einen in radialer Richtung nach außen abragenden Verbindungsflansch. Die aneinandergrenzenden Verbindungsflansche werden zum Verbinden zweier derartige Rohre mit mehreren Schraubverbindungen miteinander verspannt. Ein für diese Zwecke geeignetes Vielfachschraubwerkzeug ist aus EP 2 288 476 B1 bekannt. Bei diesem vorbekannten Vielfachschraubwerkzeug ist eine der Anzahl der zu spannenden Schrauben entsprechende Anzahl an Spanneinrichtungen vorgesehen, beispielsweise sechs Spannstationen. Die Spannstationen sind um ein Zentrum angeordnet. Diese vorbekannte Spanneinrichtung ist ringförmig konzipiert und belässt eine zentrale Öffnung, durch die die Rohre mit ihren Flanschen hindurchgezogen werden können. Jede Spannstation ist in radialer Richtung verfahrbar, damit diese aus einer Nicht-Benutzungsstellung, in der durch eine zentrale Öffnung des Vielfachschraubwerkzeuges ein Steigrohr mit seinem Flansch hindurchgeführt werden kann, in eine Benutzungsstellung zum Spannen der Schraubbolzen verstellt werden kann. Zum Spannen der Schraubverbindungen von zwei aneinandergrenzenden Verbindungsflanschen zweiter Steigrohre werden die Spannstationen in radialer Richtung in ihre Spannposition verfahren. Jede Spannstation verfügt über eine Antriebsspindel, die als Spannwerkzeug eine Nuss antreibt. Die Nuss hat eine Innenmitnehmerkontur, die komplementär zu der Mitnehmerkontur des Kopfes eines zu spannenden Schraubbolzens ist, der durch die Spannstation gespannt werden soll.

Angetrieben ist jede Antriebsspindel durch einen eigenen hydraulisch betätigten Ratschenantrieb. Angeschlossen ist zu diesem Zweck an den Ratschenhebel des Ratschenantriebes die Kolbenstange eines hydraulisch betätigten Kolbens. Der Ratschenhebel verfügt über eine Mitnehmerklaue, die eine in dem Ratschenhebel drehbar gelagerte Antriebsspindel antreibt. Die Antriebsspindel verfügt über eine quadratische Öffnung, in die der Antriebsstift mit einer komplementären Mitnehmergeometire einer Nuss als Spannwerkzeug eingesteckt werden kann. Die Mitnehmerklaue steht unter Federvorspannung und wirkt unter der Federvorspannung mit einer Außenzahnung der Antriebsspindel zusammen. Mit einem Vorhub der Kolbenstange wird die Antriebsspindel entsprechend dem ausgeführten Hub um zumindest einen Zahn gegenüber der Mitnehmerklaue weiterbewegt. Mit dem Rückhub wird der Ratschenhebel wieder in seine Ausgangsstellung gebracht, während der Bolzen nicht zurückdreht. Dieser Wechsel zwischen Vor- und Rückhub wird so lange ausgeführt, bis der Spannbolzen mit der vorgesehenen Spannkraft angezogen ist.

Bei derartigen Vielfachschraubwerkzeugen ist es mitunter aufwendig, dass die am Vielfachschraubwerkzeug befindlichen Spannwerkzeuge mit unseren Mitnehmerkonturen die Konturen der anzutreibenden Teile einer Schraubverbindung, beispielsweise den Kopf eines Schraubbolzens finden. Bei einem solchen Vielfachschraubwerkzeug befinden sich die Spannwerkzeuge typischerweise bezüglich ihrer Drehstellung bezüglich ihrer Mitnahmekontur als die anzutreibenden Teile der Schraubverbindungen. Darüber hinaus sollen die einzelnen Schraubverbindungen einer solchen Vielfachverschraubung mit einem gleichen Drehmoment gespannt werden. Bei Schraubverbindungen, die mit einem hohen Drehmoment, also beispielsweise 200 Nm oder mehr gespannt werden sollen, kann dieses jedenfalls nicht mit einfachen, vertretbaren Mitteln mittels in die einzelnen Ratschenantriebe eingeschalteten drehmomentbegrenzten Rutschkupplungen realisiert werden, zumal ein solcher Ratschenantrieb verschleißanfällig wäre.

Ausgehend von diesem diskutierten Stand der Technik liegt der Erfindung daher die Aufgabe zu Grunde, ein Vielfachschraubwerkzeug dergestalt weiterzubilden, dass vor dem Spannen oder Lösen auf einfache Weise in Finden der komplementären Mitnahmekonturen zwischen Spannwerkzeug und anzutreibenden Teil der Schraubverbindung, sondern auch ein Spannen der Schraubverbindung auch mit höheren Drehmomenten ohne Zwischenschaltung eines Drehmomentbegrenzers in jeden individuellen Ratschenantrieb möglich ist.

Gelöst wird diese Aufgabe erfindungsgemäß durch ein eingangs genanntes, gattungsgemäßes Vielfachschraubwerkzeug, bei dem das Vielfachschraubwerkzeug eine Zustelleinheit zum Induzieren einer Drehbewegung in die Antriebsspindeln mit einem um die Achse des Zentrums der ringförmigen Anordnung der Antriebsspindeln drehbar gelagerten Stellrad als Antriebsrad umfasst, das jeweils ein auf der Antriebsspindel sitzendes Abtriebsrad antreibt, wobei die Übertragung der Antriebsbewegung des Stellrades auf die Antriebsspindel unter Zwischenschaltung jeweils eines Drehmomentbegrenzers erfolgt.

Vorteilhafte Ausführungsformen des Vielfachschraubwerkzeugs sind Gegenstand der abhängigen Ansprüche.

Dieses Vielfachschraubwerkzeug verfügt über eine Zustelleinheit, die vor Beginn des eigentlichen Spann- oder Lösevorgangs betätigt wird. Mit der Zustelleinheit können die Antriebsspindeln bewegt werden. Zu diesem Zweck verfügt die Zustelleinheit über ein Stellrad, welches um die Achse des Zentrums der ringförmigen Antriebsspindeln drehbar gelagert ist. Dieses Stellrad ist ein Antriebsrad und treibt jeweils ein auf einer Antriebsspindel sitzendes Abtriebsrad an. Auf diese Weise kann eine Antriebsbewegung des Stellrades auf die Antriebsspindeln übertragen werden. Von Besonderheit bei der Zustelleinheit ist, dass die Übertragung der Antriebsbewegung des Stellrades auf die Antriebsspindeln unter Zwischenschaltung jeweils eines Drehmomentbegrenzers erfolgt. Dieser dient dem Zweck, dass mittels der Zustelleinheit die zu spannenden Schraubverbindungen mit einem ersten gleichen Drehmoment gespannt werden können. Das Stellrad kann manuell, beispielsweise mit einer Knarre als Antriebswerkzeug oder auch mit einem elektrischen Schraubwerkzeug betätigt werden. Eine Betätigung kann selbstverständlich auch hydraulisch oder pneumatisch erfolgen. Das in das Stellrad eingeleitete Drehmoment ist begrenzt. Durch die Drehbewegung des Stellrades und der dadurch bewirkten Drehbewegung der Antriebsspindeln bei über die Rutschkupplungen übertragenen Drehmoment werden die auf den Antriebsenden der Antriebsspindeln sitzenden Spannwerkzeuge gedreht. Bei den Spannwerkzeugen handelt es sich typischerweise um Federspannwerkzeuge, die gegen die Kraft einer Rückstellfeder auf der Antriebsspindel in längsaxialer Richtung über einen gewissen Betrag verstellt werden können. Wird beim Betätigen der Zustelleinrichtung das Vielfachspannwerkzeug mit leichtem Druck auf die Spannwerkzeuge diese gegen die Spannelemente, beispielsweise die Spannbolzen gehalten, springen die bei dieser Ausgestaltung als Nüsse ausgeführten Spannwerkzeuge auf die Bolzenköpfe, wenn die komplementären Mitnahmekonturen miteinander fluchten. Somit können bei einer Betätigung der Zustelleinheit mit einem geringen, insbesondere manuell in das Stellrad eingebrachten Drehmomentes die Spannwerkzeuge ohne weiteres komplementären Mitnahekonturen eines Spannelementes finden und miteinander in Eingriff gestellt werden.

Die Drehmomentbegrenzung in der Übertragung eines Drehmomentes von dem Stellrad in die Antriebsspindeln dient dem Zweck, dass die durch die Antriebsspindeln mit ihren Spannwerkzeugen angetriebenen Spannelemente, beispielsweise die Spannbolzen soweit gespannt werden, bis die Rutschkupplung greift und eine Übertragung eines weiteren Drehmomentes auf eine Antriebsspindel nicht mehr übertragen wird. Die als Rutschkupplung ausgeführten Drehmomentbegrenzer der einzelnen Antriebsspindeln sind so eingerichtet, dass die Drehmomentbegrenzung bei jeder Antriebsspindel bei gleichem Drehmoment greift. Auf diese Weise können unterschiedlich gespannte Spannelemente in eine Vorspannungsstellung gebracht werden, bei der diese alle mit derselben Vorspannung gespannt sind. Der anschließende Betrieb des Vielfachwerkzeuges zum Spannen der Schraubverbindungen mittels der Ratschenantriebe beginnt somit in Bezug auf sämtliche zu spannenden Schraubverbindungen ausgehend von einer gleichen Vorspannung. Diese Vorspannung braucht nicht besonders hoch zu sein. Diese dient lediglich dem Zweck, dass der Schraubvorgang bei allen Schraubverbindungen von demselben Ausgangspunkt bezüglich der anliegenden Vorspannung beginnt. Dann ist ein Antrieb der Antriebsspindeln mittels der Ratschenantriebe zum Erzielen eines gleichen Anzugsdrehmomentes ohne einen mechanischen Drehmomentbegrenzer, der in die Ratschenantriebe eingeschaltet ist, möglich. Das auf die Antriebsspindeln einzubringende Drehmoment ist dann allein abhängig von dem bereitgestellten Hydraulikfluiddruck, mit dem die Ratschenantriebe angetrieben werden. Da der Hydraulikfluiddruck in allen Stellzylindern, die zum Antreiben der Ratschenantriebe eingesetzt sind, gleich ist, ist auch auf die einzelnen Antriebsspindeln maximal zu induzierende Drehmoment gleich.

In einem Ausführungsbeispiel ist vorgesehen, dass zum Realisieren des jede Antriebsspindel zugeordneten Drehmomentbegrenzers das Abtriebsrad mit einer Außenzahnung eine Zahnung des Stellrades kämmt, jedoch innenseitig an zwei Kupplungsscheiben unter einer die Drehmomentbegrenzung definierenden Vorspannung anliegt. Die Kupplungsscheiben sind gemäß einer möglichen Ausführung mit ihren Kupplungsflächen zueinander geneigt, wodurch eine Abtriebsradaufnahme bereitgestellt ist. Die Neigung kann linear oder, wie in einem Ausführungsbeispiel vorgesehen, gekrümmt sein. Die Innenkontur des Abtriebsrades ist komplementär zur Querschnittskontur der Kupplungsflächen ausgeführt. Die Vorspannung wird typischerweise durch zumindest eine auf eine Kupplungsscheibe wirkende Druckfeder bereitgestellt, während sich die andere Kupplungsscheibe an einem Widerlager abstützt. Wenn gewünscht, kann vorgesehen sein, dass die auf die Kupplungsscheiben wirkende Vorspannung einstellbar ist. In aller Regel wird dieses nicht erforderlich sein, da es zum Spannen der Schraubverbindungen nicht auf das übertragende Drehmoment beim Antreiben der Antriebsspindeln mittels der Zustelleinheit ankommt. Wesentlich ist, dass die Drehmomentbegrenzung in dem Antrieb der Antriebsspindeln durch die Zustelleinheit bei allen Antriebsspindeln gleich ist.

Vorzugsweise ist die Zustelleinheit ein Modul des Vielfachspannwerkzeuges und kann lösbar an einen die Ratschenantriebe enthaltenen Antriebsblock angeschlossen sein. Bei einer solchen Ausgestaltung des Vielfachschraubwerkzeuges können sich die Bauteile der Zustelleinheit in einem ein Oberteil und ein Unterteil umfassenden Gehäuse befinden.

Bei einer modularen Ausgestaltung der Zustelleinheit des Vielfachschraubwerkzeuges sind in einem bevorzugten Ausführungsbeispiel die Antriebsspindeln in einem Antriebsblock, der die Ratschenantriebe enthält, gelagert und gehalten und ragen aus diesem beidseitig mit jeweils einem Antriebsabschnitt heraus. Auf die auf der einen Seite herausragenden Antriebsabschnitte der Antriebsspindeln sind die Spannwerkzeuge aufgesetzt. Die Zustelleinheit ist bei einer solchen Auslegung dann an die andere Seite des Antriebsblockes angeschlossen und wirkt auf die anderen Antriebsabschnitte. Die Spannwerkzeuge sind typischerweise lösbar an die Antriebsspindel angeschlossen, ebenso wie die Zustelleinheit. Insofern kann dieses Vielfachschraubwerkzeug von einem Spannbetrieb in einen Lösebetrieb gewechselt werden, und zwar durch Abnehmen der Spannwerkzeuge von den einen Antriebsabschnitten der Antriebsspindeln und der Zustelleinheit von den anderen Antriebsabschnitten der Antriebsspindeln und anschließend dieser Komponenten an die jeweils anderen Antriebsabschnitte.

In einer Weiterbildung eines solchen Vielfachschraubwerkzeuges ist vorgesehen, dass auf jede Antriebspindel zusätzlich zu dem Ratschenantrieb eine Verriegelungsratsche zum Verriegeln der Antriebsspindel gegen ein Zurückdrehen beim Ausüben einer Rückhubbewegung der Antriebsratsche wirkt, welche Verriegelungsratschen in einem von den Antriebsspindeln durchgriffenen Verriegelungsträger angeordnet sind, und dass der Verriegelungsträger über Mittel zum Lösen der Verriegelungsratschen verfügen.

Bei diesem Vielfachschraubwerkzeug wirkt auf jede Antriebsspindel neben dem Ratschenantrieb eine Verriegelungsratsche. Die Ratsche des Ratschenantriebs sowie die Verriegelungsratsche wirken jeweils in derselben Richtung auf die Antriebsspindel. Sowohl die Mitnehmerklaue des Ratschenantriebes als auch die Verriegelungsratsche mit einer Verriegelungsklaue stehen mit einer Außenzahnung der Antriebsspindel in Eingriff. Die Mitnehmerklaue des Ratschenantriebes und die Verriegelungsklaue der Verriegelungsratsche greifen gleichermaßen in eine Zahnung der Antriebsspindel ein. Dies bedeutet, dass bei Ausüben eines Rückhubes des Ratschenhebels des Ratschenantriebes ein Zurückfedern, beispielsweise durch eine zuvor darin induzierte Torsionskraft der Antriebsspindel durch die Verriegelungsratsche blockiert ist. Die Verriegelungsratschen dieses Vielfachschraubwerkzeuges sind in einem Verriegelungsträger angeordnet, der von den Antriebsspindeln durchgriffen ist. Der Verriegelungsträger folgt somit der Anordnung der um ein Zentrum angeordneten Antriebsspindel. Typischerweise ist der Verriegelungsträger ringförmig. Durchaus möglich ist jedoch auch eine Ausgestaltung, bei der dieser sich nur über ein Kreissegment erstreckt. Auch bei einer solchen Ausgestaltung sind die Antriebsspindeln um ein Zentrum herum angeordnet, jedoch nicht zu einer Ringstruktur, sondern nur zu einer Kreissegmentstruktur angeordnet. Das Vorsehen eines Verriegelungsträgers, in dem die Verriegelungsratschen angeordnet sind, erlaubt, dass dieser über Mittel zum Lösen der Verriegelungsratschen verfügt. Mit diesen Mitteln können die Verriegelungsklauen aus ihrer in eine Außenverzahnung der Antriebsspindel eingreifenden Stellung herausbewegt werden. Zu diesem Zweck sind die Verriegelungsklauen in dem Verriegelungsträger typischerweise translatorisch gegen die Kraft einer Rückstellfeder gehalten, gegen welche Federkraft die Verriegelungsklauen aus ihrer verriegelnden Stellung mit dem Eingriff ihrer Zähne in eine Außenverzahnung der Antriebsspindel herausbewegt werden. Die Führung einer Verriegelungsklaue innerhalb des Verriegelungsträgeres wird typischerweise durch die Wände der Verriegelungskammer bereitgestellt, in die eine solche Verriegelungsklaue eingesetzt ist. Eine solche Verriegelungskammer stellt eine Erweiterung in radialer Richtung zu einem Antriebsspindeldurchbruch dar.

Nachfolgend ist die Erfindung anhand eines Ausführungsbeispiels unter Bezugnahme auf die beigefügten Figuren beschrieben. Es zeigen:
- **Fig. 1:**: Eine Längsschnittdarstellung durch ein Vielfachschraubwerkzeug,
- **Fig. 2:**: einen Querschnitt durch das Vielfachschraubwerkzeug der Figur 1 entlang der Linie A-B,
- **Fig. 3:**: einen weiteren Querschnitt durch das Vielfachschraubwerkzeug der Figur 1 entlang der Linie C-D zum Darstellen einer Verriegelungseinrichtung zum Verriegeln der Antriebsspindeln in Verriegelungsstellung und

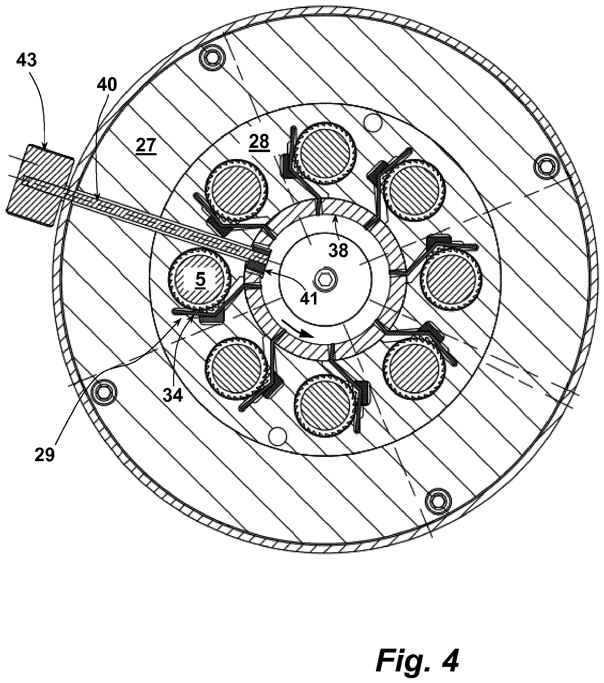

- **Fig. 4:**: die Darstellung der Figur 3 mit entriegelten Verriegelungseinrichtungen.

Ein Vielfachschraubwerkzeug 1 ist bei dem in den Figuren dargestellten Ausführungsbeispiel modular aufgebaut und umfasst einen Antriebsblock 2 als erstes Modul, eine Verriegelungseinheit 3 als zweites Modul sowie eine Zustelleinheit 4 als drittes Modul. Die einzelnen Module 2, 3, 4 werden nachstehend erläutert. Auch wenn diese im Rahmen dieser Ausführungen miteinander zur Ausbildung des Vielfachschraubwerkzeuges 1 kombiniert sind, können die Einzelmodule 2, 3, 4 auch unabhängig voneinander zusammen mit auch anders konzipierten Bestandteilen eines Vielfachschraubwerkzeuges verwendet werden. Beispielsweise kann die mit der Verriegelungseinheit 3 bewirkte Funktionalität auch im Zusammenhang mit einem anderen Antriebsblock oder auch ohne Zustelleinheit oder auch mit einer anders gearteten Zustelleinheit kombiniert werden. Gleiches gilt für die Zustelleinheit 3.

### Der Antriebsblock

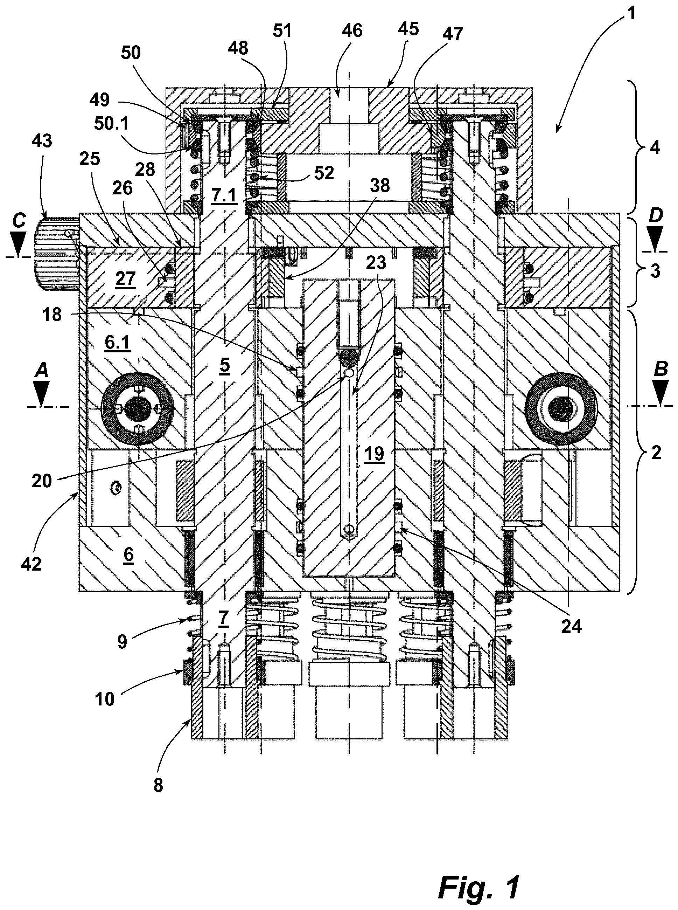

In dem Antriebsblock 2 sind bei dem dargestellten Ausführungsbeispiel acht Antriebsspindeln 5 vorgesehen. Diese sind ringförmig um ein Zentrum angeordnet. In dem Antriebsblock 2 sind diese drehbar gelagert und gehalten. Der Antriebsblock 2 weist eine zylindrische äußere Mantelfläche auf. In der Schnittdarstellung der Figur 1 sind zwei Antriebsspindeln 5 im Schnitt gezeigt, während drei weitere, dahinterliegende in einer Ansicht bzw. Teilansicht erkennbar sind. Nachstehend ist die in Figur 1 linke Antriebsspindel 5 und ihr Antrieb näher beschrieben. Diese Ausführungen gelten gleichermaßen auch für die übrigen Antriebsspindeln 5, die genauso aufgebaut sind wie die nachstehend näher beschriebene Antriebsspindel mit ihrem Antrieb.

Der Antriebsblock 2 ist bei dem dargestellten Ausführungsbeispiel durch zwei Blockscheiben 6, 6.1 bereitgestellt. Die Antriebsspindel 5 durchgreift die miteinander befestigten Blockscheiben 6, 6.1 und ragt aus diesen beidendig heraus. Diese aus dem Antriebsblock 2 herausragenden Abschnitte der Antriebsspindel 5 sind im Rahmen dieser Ausführungen als Antriebsabschnitte 7, 7.1 angesprochen. Auf den in Figur 1 unterseitig aus dem Antriebsblock 2 herausragenden Antriebsabschnitt 7 sitzt als Spannwerkzeug drehmomentschlüssig eine Nuss 8 mit einer innenseitigen Mitnahmekontur. Die Nuss 8 ist lösbar auf dem Antriebsabschnitt 7 in an sich bekannter Weise gehalten, und zwar durch einen durch eine Druckfeder 9 vorgespannten Verriegelungsring 10. Wird der Verriegelungsring 10 in Richtung zu dem Antriebsblock 2 bewegt, löst sich die durch eine in der Figur nicht dargestellte Kugel bewirkte Verriegelung, so dass die Nuss 8 von dem Antriebsabschnitt 7 abgenommen werden kann. Gelagert ist die Antriebsspindel 5 in dem Antriebsblock 2 durch Lager, die an ihren nach außen weisenden Seiten zudem Abstreifer aufweisen können, durch die ein Eindringen von Verschmutzungen in die Lager der Antriebsspindel 5 verhindert ist.

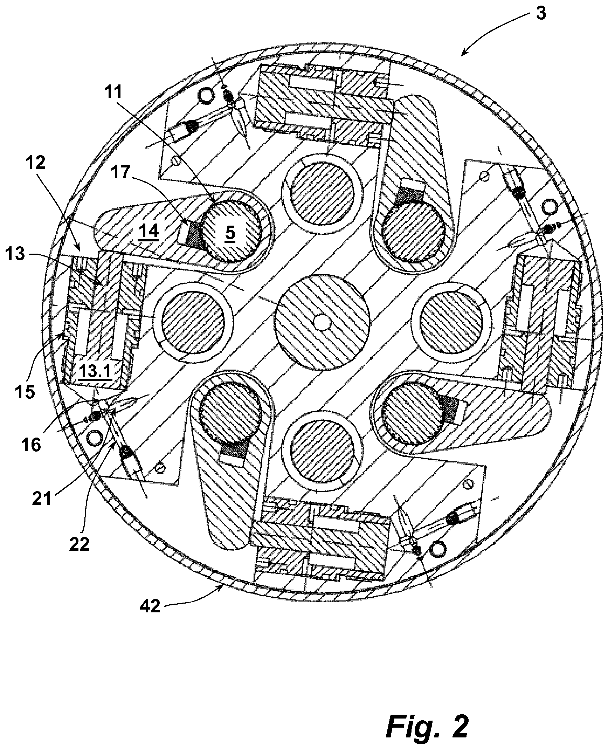

Zum Antreiben der Antriebsspindel 5 dient ein Ratschenantrieb, wie dieser deutlicher anhand der Querschnittdarstellung der Figur 2 beschrieben werden kann. Bei dem dargestellten Ausführungsbeispiel sind vier Ratschenantriebe in der oberen Blockscheibe 6.1 und vier weitere Ratschenantriebe in der unteren Blockscheibe 6 untergebracht. Die Ratschenantriebe selbst sind bei den einzelnen Antriebsspindeln 5 identisch aufgebaut.

Zum Antrieb mittels eines solchen Ratschenantriebes trägt die Antriebsspindel 5 in ihrem Antriebsabschnitt eine umlaufende asymmetrische Außenzahnung 11, wie dieses für Ratschenantriebe typisch ist. Die längeren Zahnflanken weisen in Antriebsrichtung der Antriebsspindel 5. Die kürzeren Zahnflanken weisen in die entgegengesetzte Drehrichtung. Der Ratschenantrieb umfasst eine Kolben-Zylinderanordnung 12, dessen Kolbenstange 13 auf einen Ratschenhebel 14 wirkt. Ein die Kolbenstange 13 tragender Kolben 13.1 sitzt in einem durch einen Einschraubzylinder 15 bereitgestellten Zylindergehäuse. Das Zylindergehäuse 15 verfügt über zwei Fluidanschlüsse, von denen ein Fluidanschluss 16 in dem Schnitt der Figur 2 erkennbar ist. Dieser mündet in den Fußbereich einer den Einschraubzylinder 15 aufnehmenden und in den Antriebsblock 2 eingebrachten Bohrung. Über den Fluidanschluss 16 wird Hydraulikfluid in das Zylindergehäuse 15 zum Bewegen des Kolbens 13.1 mit seiner Kolbenstange 13 zum Ausüben eines Vorhubes zugeführt. Der Hydraulikanschluss für den Rückhub mündet radial in den Einschraubzylinder 15 an der zu dem Fluidanschluss 16 gegenüberliegenden Seite des Kolbens 13.1. Die Kolbenstange 13 ist druck- und zugfest an den Ratschenhebel 14 angeschlossen, so dass ein ausgeübter Vorhub des Kolbens zu einer Vorhubbewegung des Ratschenhebels 14 führt. Durch Ausüben eines Rückhubes wird der Ratschenhebel 14 in seine in Figur 2 gezeigte Position zurückgebracht. Verbunden ist der Kolben 13.1 mit dem Ratschenhebel 14 durch einen Antriebsdorn als Fortsatz der Kolbenstange 13. Dieser Antriebsdorn durchgreift eine Bohrung des Ratschenhebels 14, die in Bewegungsrichtung der Kolbenstange 13 verläuft. Zwischen dem Antriebsdorn und der Kolbenstange 13 befindet sich ein Stellabsatz, mit dem die Kolbenstange 13 zum Übertragen einer Vorhubbewegung gegen einen die vorgenannte Bohrung für den Durchgriff des Antriebsdorns bereitstellenden Bolzen des Ratschenhebels 14 wirkt. Der Dorn durchgreift die Bohrung. Auf seinem aus der Bohrung herausragenden Abschnitt sitzt eine Mitnehmerscheibe, beispielsweise ein Sprengring, durch den bei Ausüben einer Rückhubbewegung mit der Kolbenstange 13 der Ratschenhebel 14 mitgenommen ist.

In den Ratschenhebel 14 ist eine Mitnehmerklaue 17 eingesetzt. Diese greift unter Federvorspannung stehend (in der Figur nicht gezeigt) mit ihrer Klauenzahnung in die Außenzahnung 11 der Antriebsspindel 5 ein. Die Zahnung der Mitnehmerklaue 17 ist komplementär zur Außenzahnung 11 der Antriebsspindel 5 ausgelegt. Bei Ausüben eines Vorhubes der Kolbenstange 13, was zu einer rechtsdrehenden Bewegung des Ratschenhebels 14 führt, wird die Antriebsspindel 5 im Uhrzeigersinne bewegt. Bei dem dargestellten Ausführungsbeispiel wird die Antriebsspindel bei Ausüben eines Vorhubes um einen Zahn weiterbewegt. Bei Ausüben eines Rückhubes wird der Ratschenhebel 14 mit der Mitnehmerklaue 17 in seiner in Figur 2 gezeigten Position zurückgeführt, während die Antriebsspindel 5 in ihrer Position verbleibt, in die diese durch die zuvor ausgeübte Antriebsbewegung gebracht worden ist.

Der in Figur 1 gezeigte Antriebsblock 2 zeigt die Übereinanderanordnung der winkelversetzt zueinander angeordneten Ratschenantriebe in den beiden Blockscheiben 6, 6.1. Der Antriebsblock 2 des Vielfachschraubwerkzeugs 1 verfügt über einen ersten Hydraulikfluidanschluss zum Zuführen von Hydraulikfluid von einer Hydraulikpumpe zum Ausüben des Vorhubes und über einen zweiten Hydraulikanschluss zum Zuführen von Hydraulikfluid zum Ausüben des Rückhubes. Diese Hydraulikanschlüsse sind in der Figur nicht sichtbar. Der Hydraulikfluidanschluss für den Vorhub ist mit einem in radialer Richtung verlaufenden Kanal an einen als Ringkanal 18 ausgeführten Fluidverteilerhohlraum angeschlossen. Der Ringkanal 18 ist in die Wandung einer zentralen in den Antriebsblock 2 eingebrachten Bohrung eingebracht. Die Bohrung ist mit einem zylindrischen Fluidverteiler 19 ausgefüllt. Dieser verfügt über diesen querende Querbohrungen 20 in Höhe des Ringkanals 18. Zu beiden Seiten des Ringkanals 18 sind Dichtringe in Nuten zum Abdichten der Mantelfläche des Fluidverteilers 19 vorgesehen. Der Ringkanal 18 dient für die Zufuhr von für den Vorhub benötigtem Hydraulikfluid der in der Blockscheibe 6.1 angeordneten Kolben-Zylinderanordnungen 12 der Ratschenantriebe. In den Ringkanal 18 münden auch Fluidkanäle, die eine Verbindung zwischen dem Ringkanal 18 und den in der Blockscheibe 6.1 verbauten Kolben-Zylinderanordnungen 12 für den Vorhub herstellen. Eine solche Leitung ist, da gegenüber einer horizontalen Ebene geneigt verlaufend, in einem kleinen Abschnitt 21 in der Figur 2 erkennbar. Die an den Abschnitt 21 grenzende Querbohrung 22 dient zum Herstellen einer Fluidverbindung zwischen dem radialen Verlauf des Abschnittes 21 und dem Fluidanschluss 16 bzw. dem Zylindergehäuse 15. Diese Querbohrung 22 ist an ihrem dem Einschraubzylinder 15 gegenüberliegenden Ende verschlossen. Um die Kolben-Zylinderanordnung der Blockscheibe 6 ebenfalls für den Vorhub mit Hydraulikfluid zu versorgen, dienen die bereits vorstehend angesprochenen Querbohrungen 20. Diese münden in einen zentralen Fluidkanal 23, durch den eine Fluidwegsamkeit zu einem derselben Ebene wie eine zweite Ringkammer 24 in der unteren Blockscheibe 6 hergestellt ist. In die Ringkammer 24 münden ebenfalls vier Fluidkanäle zum Herstellen einer Fluidverbindung zwischen einem ersten Fluidanschluss der in der Blockscheibe 6 aufgenommenen Zylindergehäuse.

Die Kolben-Zylinderanordnungen 12 des Antriebsblockes 2 sind sämtlich gleich ausgeführt. Daher wird für die Ausübung eines Vorhubes von jeder Kolben-Zylinderanordnung dieselbe Hydraulikfluidmenge benötigt.

Der Hydraulikfluidanschluss zum Zuführen von Hydraulikfluid für den Rückhub mündet in einen an die Oberseite der Blockscheibe 6.1 angeschlossenen ringförmigen Fluidverteiler 25. Der Fluidverteiler 25 stellt einen weiteren Ringkanal 26 bereit, in den in der Figur nicht näher dargestellte Fluidkanäle münden, die mit ihrem anderen Ende an jeweils einen Rückhubfluidanschluss eines Einschraubzylinders 15 angeschlossen sind. Während die Fluidkanäle zum Zuführen von Hydraulikfluid an die Kolben-Zylinderanordnungen 12 weitgehend in radialer Richtung verlaufen, verlaufen die Fluidkanäle zum Zuführen des Hydraulikfluids zum Ausüben eines Rückhubes weitgehend in vertikaler Richtung und somit in Richtung der Längserstreckung der Antriebsspindeln 5.

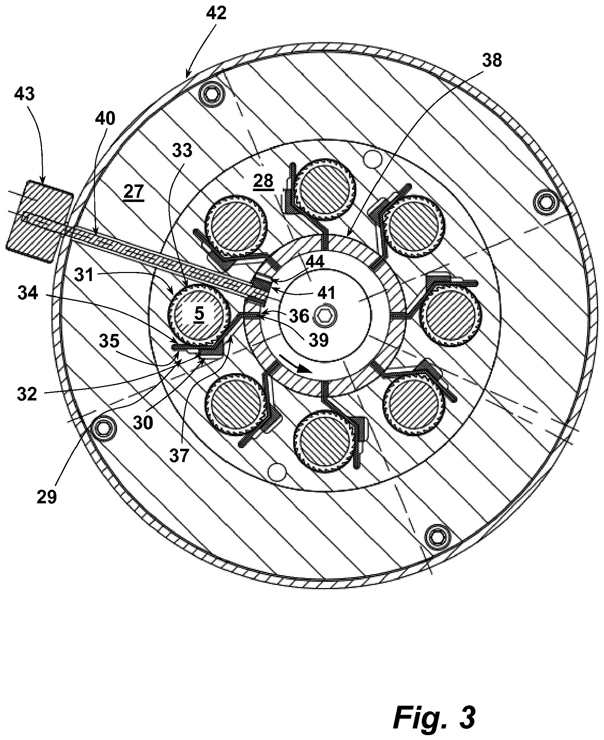

Der Ringkanal 26 wird bei dem dargestellten Ausführungsbeispiel durch zwei konzentrisch zueinander angeordnete Ringkörper 27, 28 bereitgestellt. In den in radialer Richtung außenliegenden Ringkörper 27 ist in dessen Innenwandung die Geometrie des Ringkanals 26 eingebracht. Dieser ist in radialer Richtung innenseitig durch den zweiten Ringkörper 28 mit dessen äußerer Mantelfläche verschlossen. Benachbart zu dem Ringkanal 26 angeordnete Ringdichtungen sorgen für die notwendige Dichtigkeit. Der innenliegende Ringkörper 28 ist, wie aus den Figuren 1 und 3 erkennbar, von den Antriebsspindeln 5 durchgriffen.

### Die Verriegelungseinheit

Der innenliegende Ringkörper 28 stellt bei dem dargestellten Ausführungsbeispiel zugleich einen Verriegelungsträger dar. Die Antriebsspindeln 5 durchgreifen den ringförmigen Verriegelungsträger 28. Der Verriegelungsträger 28 trägt eine jeder Antriebsspindel 5 zugeordnete Verriegelungsratsche 29 zum Verriegeln der jeweiligen Antriebsspindel 5 gegen ein Zurückdrehen bzw. Zurückfedern beim Ausüben einer Rückhubbewegung der Antriebsratsche, also dann, wenn die Mitnehmerklaue mit ihren Zähnen aus der Außenzahnung 11 der Antriebsspindel 5 herausgebracht ist. Jede Verriegelungsratsche 29 umfasst eine Verriegelungskammer 30 als Fortsatz der Durchbrechung 31, der die Antriebsspindel 5 durchgreift. In der Verriegelungskammer 30 sitzt eine Verriegelungsklaue 32, die mit ihrer Zahnung federbelastet (in den Figuren nicht dargestellt) in die an diesem Abschnitt der Antriebsspindel 5 ebenfalls vorhandene Außenzahnung 33 eingreift. Die Außenzahnung 33 und die Außenzahnung 11 der Antriebsspindel 5 sind gleichsinnig asymmetrisch und mit gleicher Zahnzahl ausgeführt. Gleiches gilt für die Wirkrichtung der Verriegelungsklaue 30 und der Mitnehmerklaue 17. Erreicht wird durch die Verriegelungsratsche 29, dass bei Ausüben eines Rückhubes der Antriebsratsche die Verriegelungsratsche 29 in ihrer sperrenden Position bleibt. Dieses ermöglicht ein Aufbringen auch eines solchen Drehmomentes auf die Antriebsspindel 5 und damit auf das bei dem dargestellten Ausführungsbeispiel als Nuss 8 ausgeführte Spannwerkzeug und auf einen damit zu spannenden Bolzen in einem solchen Maße, dass der Bolzen und/oder die Antriebsspindel 5 tordiert werden. Durch die Sperrwirkung der Verriegelungsratsche 29 ist bei Ausüben eines Rückhubes ein ansonsten unvermeidbares Zurückfedern der in die Antriebsspindel 5 und/oder den Spannbolzen eingebrachten Torsion wirksam verhindert.

Die Verriegelungsklaue 32 ist im Querschnitt T-förmig ausgeführt, wobei der mittlere Abschnitt die mit der Außenzahnung 33 der Antriebsspindel 5 zusammenwirkenden Sperrzähne trägt. Die zu beiden Seiten benachbarten Abschnitte haben jeweils eine Stellfläche, an der ein Stellhebel 34 anliegt. Der Stellhebel 34 dient dem Zweck, die Verriegelungsklaue 29 aus ihrer Eingriffsstellung mit ihren Zähnen der Außenzahnung 33 der Antriebsspindel 5 herauszuführen, wenn die Verriegelung gelöst werden soll. Der Stellhebel 34 ist mit seinem in radialer Richtung außenliegenden Ende in einer Rückstellhebelaufnahme 35 des Verriegelungsträgers 28 gehalten. Der Verriegelungshebel 34 durchgreift, obwohl, wie in Figur 3 gezeigt, gewinkelt ausgeführt, in wesentlichen in radialer Richtung den Verriegelungsträger 28 und ragt mit einem Stellabschnitt 36 in radialer Richtung innenseitig aus dem Verriegelungsträger 28 heraus. Geführt ist der Stellhebel 34 in einem Stellhebelkanal 37 des Verriegelungsträgers 28. Der Verriegelungskanal 37 weist in Umfangsrichtung des Verriegelungsträgers 28 einen hinreichenden Freiraum, um eine Bewegung des Stellhebels 34 zum Wegrücken der Verriegelungsklaue 29 von der Antriebsspindel 5 zu gestatten, und zwar so weit, dass die ansonsten durch die Federbelastung bewirkte Ineingriffstellung der Zähne der Verriegelungsklaue 29 mit der Außenzahnung 33 der Antriebsspindel 5 gelöst werden kann. Radial innenseitig zu dem Verriegelungsträger 28 befindet sich ein Stellring 38, der wiederum eine Rückstellhebelaufnahme 39 für den Stellabschnitt 36 des Stellhebels 34 aufweist. Der Stellring 38 ist, wie in Figur 3 durch einen Pfeil angedeutet, gegenüber dem Verriegelungsträger 28 drehbeweglich verstellbar. Zum Verstellen des Stellringes 28 dient eine Stellstange 40, die an ihrem in den Stellring 38 eingreifenden Endabschnitt einen Stellnocken 41 trägt. Die Stellstange 40 ist durch den Verriegelungsträger 28, den äußeren Ringkörper 27 und durch ein Gehäuse 42 nach außen geführt und trägt an seinem Außengehäuse 42 herausragenden Ende eine Handhabe 43, an der die Stellstange 40 zum Verstellen des Stellringes 38 gedreht werden kann. Figur 3 zeigt den Verriegelungsträger 28 mit seinen Verriegelungsratschen 29 und dem Stellring 38 in Spannstellung des Vielfachschraubwerkzeuges 1, in welche Stellung die Verriegelungsratschen 29 sperrend in die Außenzahnung 33 der Antriebsspindel 5 eingreift.

Zum Zurückrücken der Verriegelungsklauen 30 aus ihrer Eingriffsstellung mit der Außenzahnung 31 der Antriebsspindeln 5 wird die Stellstange 40 mittels der Handhabe um etwa 180 Grad gedreht. Durch den Eingriff des exzentrisch ausgeführten Stellnockens 41 in eine Stellnockenaussparung 44 des Stellringes 38 wird der Stellring 38 gegen den Uhrzeigersinn verstellt, wodurch die an den Stellflächen anliegenden Stellhebel 34 die Verriegelungsklauen 32 von der jeweiligen Antriebsspindel 5 wegrücken. Sollte über die Antriebsspindeln 5 auf die Verriegelungsklauen 32 eine Torsionskraft wirken und das vorbeschriebene Lösen der Verriegelung durch Drehen der Stellstange 40 nicht ohne weiteres möglich sein, wird man durch die Kolben-Zylinderanordnungen 12 zum Ausüben eines Vorhubes ansteuern, um auf diese Weise die auf den Verriegelungsklauen 32 wirkende Torsionskraft zu reduzieren. Dann kann das Vielfachschraubwerkzeug 1 ohne weiteres von den gespannten Spannbolzen bezogen werden.

Durch die Verriegelungseinheit 3 ist es somit möglich, mit dem Vielfachschraubwerkzeug 1 Schraubverbindungen mit einem besonders hohen Drehmoment zu spannen, insbesondere einem solchen, mit dem die Schraubverbindung unter einer gewissen Torsion der Spannpartner verspannt bleibt.

### Die Zustelleinheit

Auf die den Spannwerkzeugen gegenüberliegenden Antriebsabschnitte 7.1 (siehe Figur 1) der Antriebsspindeln 5 wirkt die Zustelleinheit 4. Die Zustelleinheit 4 dient zum Induzieren einer Drehbewegung in die Antriebsspindeln 5, um die auf den Antriebsabschnitten 7 sitzenden Nüsse 8 mit ihrer innenseitigen Mitnahmekontur in eine fluchtende Anordnung der Mitnahmekontur der einzelnen Schraubbolzen zu bringen. Zudem dient die Zustelleinheit 4 dem Zweck, die mit dem Vielfachschraubwerkzeug 1 zu spannenden Schraubbolzen vor dem hydraulischen Spannvorgang auf eine einheitliche Vorspannung zu bringen.

Die Zustelleinheit 4 umfasst ein zentrales Stellrad 45 mit einer zentrisch darin eingebrachten Antriebskontur 46, in die beispielsweise der Vierkant einer Ratsche oder eines anderen manuellen oder elektrischen Werkzeuges eingesetzt werden kann. Durch Drehen des Stellrades 45 können die Antriebsspindeln 5 unter Zwischenschaltung jeweils eines Drehmomentbegrenzers angetrieben werden. Das Stellrad 45 trägt eine Außenzahnung 47, die ein auf dem Antriebsabschnitt 7.1 sitzendes Abtriebsrad 48 kämmt. Das Abtriebsrad 48 verfügt über eine entsprechend komplementäre Zahnung 49 und wirkt mit seiner radialen, zwei Kupplungsflächen aufweisenden Innenseite auf zwei Kupplungsringe 50, 50.1. Die Innenseite des Abtriebsrades 48 ist zu diesem Zwecke konisch verjüngt und wirkt gegen komplementär geneigte Kupplungsflächen der Kupplungsringe 50, 51. Der in Figur 1 obere Kupplungsring 50 wirkt in Richtung der Längsachse der Antriebsspindel 5 gegen eine Widerlagerscheibe 51. Der untere Kupplungsring 50.1 steht unter der Vorspannung einer darauf wirkenden Druckfeder 52, die sich mit ihrem anderen Ende an ein Widerlager abstützt, und wirkt durch diese unter Zwischenschaltung des Abtriebsrades 48 in Richtung des anderen Kupplungsringes 50. Durch die Druckfeder 52 ist somit die Kraftübertragung von dem Abtriebsrad 48 auf die drehmomentschlüssig auf dem Antriebsabschnitt 7.1 der Antriebsspindel 5 sitzenden Kupplungsringe 50, 50.1 begrenzt.

Da das Stellrad 45 in derselben Weise alle Antriebsspindeln 5 antreibt, können mit einem geringen Drehmoment die Antriebsspindeln 5 mit ihren auf dem gegenüberliegenden Antriebsabschnitt 7 sitzenden Spannwerkzeugen in die erforderliche Ineingriffstellung mit beispielsweise dem Kopf eines Spannbolzens gebracht werden. Zudem werden die Spannbolzen durch den Antrieb über das Stellrad 45 in eine gleiche Vorspannung gebracht. Ist ein Schraubbolzen mit einer gewissen Vorspannung angezogen, greift die auf dieser Antriebsspindel 7.1 sitzende Rutschkupplung als Drehmomentbegrenzer, so dass diese Antriebsspindel 5 durch weiteres Drehbewegen des Stellrades 45 nicht weiter gespannt wird, wo hingegen die anderen Antriebsspindeln, die das über den Drehmomentbegrenzer übertragbare Drehmoment noch übertragen werden kann, noch weitergespannt werden, und zwar so lange, bis auch an diesen die Drehmomentbegrenzung durch die vorgespannten Kupplungsscheiben 50, 50.1 greift. Somit wird auf einfache Weise eine gleichmäßige Drehmomentbegrenzung des über das Stellrad 45 auf die Antriebsspindeln 5 übertragenen Drehmoments erreicht.

### Weitere Betriebseinrichtungen

Dem Vielfachschraubwerkzeug 1 sind zu seinem Betrieb ein Hydraulikaggregat sowie eine Steuereinrichtung zum Steuern des Hydraulikaggregates zugehörig. Das Hydraulikaggregat umfasst eine Hydraulikpumpe, einen Fluidtank zum Bevorraten von Hydraulikfluid, typischerweise Hydrauliköl sowie jeweils einen Fluiddruckausgang für den Vorhub und einen weiteren Fluiddruckausgang für den Rückhub. Darüber hinaus verfügt das Hydraulikaggregat über eine Durchflussmesseinrichtung, mit der die geförderte Hydraulikfluidmenge erfassbar ist und bei einem Betrieb des Hydraulikaggregates erfasst wird. Auf Grund der Durchflussmesseinrichtung wird gemäß einer bevorzugten Betriebsweise des Vielfachschraubwerkzeuges das Hydraulikaggregat Fluidfördermengen abhängig gesteuert. Dieses gewährleistet, dass eine Umschaltung von einem Vorhub in einen Rückhub der hydraulischen Stellzylinder des Vielfachschraubwerkzeuges erst erfolgt, wenn die vordefinierte Hydraulikfluidmenge gefördert ist. Diese vordefinierte Hydraulikfluidfördermenge entspricht demjenigen Hydraulikfluidvolumen, welches benötigt wird, um den in jedem hydraulischen Stellzylinder angeordneten Kolben von seiner einen Endstellung in seine andere Endstellung zu bewegen. Dadurch ist sichergestellt, dass eine Umschaltung von einer Vorhubbewegung in eine Rückhubbewegung erst erfolgt, wenn tatsächlich alle Kolben der Ratschenantriebe gleichermaßen bewegt worden sind. Gleiches gilt für eine Umschaltung von einer Rückhubbewegung in eine Vorhubbewegung. Bei einer solchen Steuerung des Hydraulikaggregates ist es somit unerheblich, ob in allen Stellzylindern der gewünschte Hub synchron oder mit geringem zeitlichem Versatz ausgeführt wird. Um die diesbezügliche Hydraulikfluidmenge bestimmen zu können, wird das Vielfachschraubwerkzeug vor seinem eigentlichen Spanneinsatz einige Male zum Ausüben eines Hubes betätigt. Dabei wird das jeweils geförderte Fluidvolumen erfasst. Durch mehrfaches Wiederholen wird ein verlässlicher Fluidfördervolumenreferenzwert erhalten. Diese Fluidfördermenge bestimmt sodann den Umschaltzeitpunkt. Wenn bei einer solchen Betriebsweise des Hydraulikaggregates des Vielfachschraubwerkzeuges die zum Umschalten von einer Vorhubbewegung in eine Rückhubbewegung notwendige Hydraulikfluidfördermenge nicht mehr gefördert werden konnte, weil zumindest eine der zu spannenden Schraubverbindungen bereits hinreichend gespannt ist, und somit der Stellzylinder mit dem anliegenden Hydraulikdruck nicht weiterbewegt werden kann, schaltet das Hydraulikaggregat typischerweise ab. Ein weiteres Spannen kann dann durch eine manuelle Förderansteuerung vorgenommen werden, bis alle Schraubverbindungen mit dem gewünschten Drehmoment gespannt sind. Wird kein Hydraulikfluid mehr gefördert, sind alle Schraubverbindungen auf Grund des gleichbleibenden Hydrauliköldruckes mit gleichem Drehmoment gespannt. Diejenige Kraft, mit der die Schraubverbindungen gespannt werden, ist bei dieser Betriebsweise abhängig von dem Druck, mit dem das Hydraulikfluid gefördert wird. Mit einem solchen Vielfachschraubwerkzeug lassen sich Schraubverbindungen auch mit sehr hohen Drehmomenten spannen.

Ein Betrieb des Hydraulikaggregates und damit des Vielfachschraubwerkzeuges kann auch auf unterschiedlichen Druckstufen erfolgen. Möglich ist es, einen ersten Spannschritt nur mit einem geringen Hydraulikdruck (wenige bar) durchzuführen. Dieser Schritt des Spannens lediglich dient dazu, dass die Spannwerkzeuge mit ihrer Mitnehmerkontur die komplementären anzutreibenden Spannelemente, beispielsweise den Kopf eines Bolzens finden und dass sämtliche Schraubverbindungen bezüglich ihrer Verspannungsstellung in einen gleichen Ausgangszustand gebracht werden. Ist dieser erreicht, erfolgt das eigentliche Spannen der Schraubverbindungen. Hierfür wird der Hydraulikdruck des Hydraulikaggregates auf den dem aufzubringenden Drehmoment entsprechenden Druck gebracht. Hierbei können durchaus Drücke von 600 bis 800 bar angelegt werden. Selbstverständlich ist es auch möglich, höhere Drucke bereitzustellen. Der Spannvorgang wird mit Hilfe der bereits vorstehend beschriebenen Fluidfördermengen abhängigen Umsteuerung durchgeführt.

**Bezugszeichenliste**

| | | | |
|---|---|---|---|
| 1 | Vielfachschraubwerkzeug | 31 | Durchbrechung |
| 2 | Antriebsblock | 32 | Verriegelungsklaue |
| 3 | Verriegelungseinheit | 33 | Außenzahnung |
| 4 | Zustelleinheit | 34 | Stellhebel |
| 5 | Antriebsspindel | 35 | Rückstellhebelaufnahme |
| 6, 6.1 | Blockscheibe | 36 | Stellabschnitt |
| 7, 7.1 | Antriebsabschnitt | 37 | Stellhebelkanal |
| 8 | Nuss | 38 | Stellring |
| 9 | Druckfeder | 39 | Rückstellhebelaufnahme |
| 10 | Verriegelungsring | 40 | Stellstange |
| 11 | Außenzahnung | 41 | Stellnocken |
| 12 | Kolben-Zylinderanordnung | 42 | Gehäuse |
| 13 | Kolbenstange | 43 | Handhabe |
| 13.1 | Kolben | 44 | Stellnockenaussparung |
| 14 | Ratschenhebel | 45 | Stellrad |
| 15 | Zylindergehäuse | 46 | Antriebskontur |
| 16 | Fluidanschluss | 47 | Außenzahnung |
| 17 | Mitnehmerklaue | 48 | Abtriebsrad |
| 18 | Ringkanal | 49 | Zahnung |
| 19 | Fluidverteiler | 50, 50.1 | Kupplungsring |
| 20 | Querbohrung | 51 | Widerlagerscheibe |
| 21 | Abschnitt | 52 | Druckfeder |
| 22 | Querbohrung | | |
| 23 | Fluidkanal | | |
| 24 | Ringkammer | | |
| 25 | Fluidverteiler | | |
| 26 | Ringkanal | | |
| 27 | Ringkörper | | |
| 28 | Ringkörper/Verriegelungsträger | | |
| 29 | Verriegelungsratsche | | |
| 30 | Verriegelungskammer | | |

## Patentansprüche

1. Vielfachschraubwerkzeug mit mehreren, ringförmig um ein Zentrum angeordneten, endseitig mit jeweils einem Spannwerkzeug (8) bestückbaren oder bestückten Antriebsspindeln (5) und einem jeder Antriebsspindel (5) zugeordneten, mittels eines hydraulischen Kolbenantriebs angetriebenen Ratschenantrieb zum Antreiben der Antriebsspindeln (5), **dadurch gekennzeichnet, dass** das Vielfachschraubwerkzeug (1) eine Zustelleinheit (4) zum Induzieren einer Drehbewegung in die Antriebsspindeln (5) mit einem um die Achse des Zentrums der ringförmigen Anordnung der Antriebsspindeln (5) drehbar gelagerten Stellrad (45) als Antriebsrad umfasst, das jeweils ein auf der Antriebsspindel (5) sitzendes Abtriebsrad (48) antreibt, wobei die Übertragung der Antriebsbewegung des Stellrades (45) auf die Antriebsspindel (5) unter Zwischenschaltung jeweils eines Drehmomentbegrenzers erfolgt.

2. Vielfachschraubwerkzeug nach Anspruch 1, **dadurch gekennzeichnet, dass** der drehmomentbegrenzten Kraftübertragung der Antriebskraft auf die Antriebsspindeln (5) die Abtriebsräder (48) unter Zwischenschaltung einer Rutschkupplung auf den Antriebsspindeln sitzen und mit einem Zahnkranz (49) eine Außenzahnung (47) des Stellrades (45) kämmen.

3. Vielfachschraubwerkzeug nach Anspruch 2, **dadurch gekennzeichnet, dass** die Rutschkupplung jeder Antriebsspindel (5) zwei drehmomentschlüssig auf der Antriebsspindel sitzende Kupplungsscheiben (50, 50.1) mit jeweils einer gegenüber der Längserstreckung der Antriebsspindel (5) geneigten Kupplungsfläche, welche Kupplungsflächen zur Ausbildung einer Abtriebsradaufnahme zueinander geneigt sind, und das Abtriebsrad (48) umfasst, das mit seiner zu den Kupplungsflächen komplementär ausgestalteten Innenseite in die Abtriebsradaufnahme eingreift und unter Vorspannung an den Kupplungsflächen der Kupplungsschreiben (50, 50.1) anliegt.

4. Vielfachschraubwerkzeug nach Anspruch 3, **dadurch gekennzeichnet, dass** die Vorspannung der Rutschkupplung durch eine auf eine Kupplungsscheibe (50.1) wirkende Druckfeder (52) bereitgestellt ist.

5. Vielfachschraubwerkzeug nach einem der Ansprüche 1 bis 4, **dadurch gekennzeichnet, dass** das Stellrad (45) eine Antriebskontur (46) zum Anschließen eines Antriebswerkzeuges aufweist.

6. Vielfachschraubwerkzeug nach einem der Ansprüche 1 bis 5, **dadurch gekennzeichnet, dass** die Zustelleinheit (4) als lösbar an einen Antriebsblock (2) des Vielfachschraubwerkzeuges (1) anschließbares Modul ausgeführt ist und die Bauteile der Zustelleinheit (4) in einem Gehäuse mit einem Oberteil und einem Unterteil aufgenommen sind.

7. Vielfachschraubwerkzeug nach Anspruch 6, **dadurch gekennzeichnet, dass** die Antriebsspindeln (5) in einem Antriebsblock (2) gelagert und gehalten sind und an jedem Ende einen von dem Antriebsblock (2) vorstehenden Antriebsabschnitt (7, 7.1) aufweisen, wobei die Antriebsabschnitte (7, 7.1) der Antriebsspindeln (5) auf der einen Seite des Antriebsblockes (2) zum Tragen der Spannwerkzeuge (8) dienen, und dass die Zustelleinheit (4) an die anderen Antriebsabschnitte (7.1) der Antriebsspindeln (5) angeschlossen ist.

8. Vielfachschraubwerkzeug nach Anspruch 7, **dadurch gekennzeichnet, dass** in dem Antriebsblock (2) die Kolben (13.1) der Kolbenantriebe in Zylindergehäusen (15) translatorisch in beide Richtungen verstellbar geführt sind, wobei die Kolbenstangen (13) zum Übertragen einer Vorhubbewegung und einer Rückhubbewegung auf jeweils einen eine Mitnehmerklaue (17) aufweisenden Ratschenhebel (14) kinematisch mit dem Ratschenhebel (14) verbunden sind, und welcher Antriebsblock (2) in seinem Zentrumsbereich zumindest einen Fluidverteilerhohlraum (18, 24) aufweist, in den mehrere in dem Antriebsblock (2) befindlichen Fluidkanäle münden, wobei durch jeden Fluidkanal eine Fluidverbindung zwischen dem Fluidverteilerhohlraum (18, 24) und einem ersten Fluideingang eines Zylindergehäuses (15) hergestellt ist, und dass an einer Flachseite des Antriebsblockes (2) ein Fluidverteiler (25) mit einem an einen Fluidzufuhrkanal angeschlossenen Ringkanal (26) als Fluidverteilerhohlraum angeordnet ist, in welchen Fluidverteilerhohlraum mehrere Fluidkanäle münden, wobei durch jeden Fluidkanal eine Fluidverbindung zwischen dem Fluidverteilerhohlraum (26) und einen zweiten Fluideingang eines Zylindergehäuses (15) hergestellt ist.

9. Vielfachschraubwerkzeug nach Anspruch 8, **dadurch gekennzeichnet, dass** der im Zentrumsbereich des Antriebsblockes (2) befindliche Fluidverteilerhohlraum als Ringkanal (18, 24) ausgeführt ist.

10. Vielfachschraubwerkzeug nach Anspruch 8 oder 9, **dadurch gekennzeichnet, dass** der Antriebsblock (2) aus zumindest zwei Blockscheiben zusammengesetzt ist, wobei in jeder Blockscheibe (6, 6.1) mehrere Ratschenantriebe angeordnet sind.

11. Vielfachschraubwerkzeug nach Anspruch 8, **dadurch gekennzeichnet, dass** ein Fluidverteilerhohlraum (18, 24) jedem der beiden Blockscheiben (6, 6.1) zugeordnet ist und die beiden Fluidverteilerhohlräume (18, 24) durch einen Fluidverteiler (19) in Fluidverbindungen miteinander gestellt sind.

12. Vielfachschraubwerkzeug nach einem der Ansprüche 8 bis 11, **dadurch gekennzeichnet, dass** die Antriebsspindeln (5) als Spannwerkzeuge Federspannwerkzeuge, etwa Federnüsse (8) tragen.

13. Vielfachschraubwerkzeug nach einem der Ansprüche 8 bis 12, **dadurch gekennzeichnet, dass** die Bewegungsrichtung der Kolbenstangen (13) der Ratschenantriebe und die Bewegungsrichtung der Ratschenhebel (14) in dieselbe Richtung weisend ausgelegt sind und der Ratschenhebel (14) unmittelbar von der Kolbenstange (13) angetrieben ist.

14. Vielfachschraubwerkzeug nach einem der Ansprüche 8 bis 13, **dadurch gekennzeichnet, dass** die Bewegungsrichtung der Kolbenstangen der Ratschenantriebe und die Bewegungsrichtung der Ratschenhebel winklig, insbesondere rechtwinklig oder in etwa rechtwinklig zueinander verlaufen und zur Übertragung der Vorhubbewegung und der Rückhubbewegung einer Kolbenstange jeweils auf einen Ratschenhebel zwischen jeder Kolbenstange und dem von dieser angetriebenen Ratschenhebel ein mit seinem einen Ende gelenkig an die Kolbenstange und mit seinem anderen Ende gelenkig an den Ratschenhebel angelenkten Umsetzhebel angeordnet ist.

15. Vielfachschraubwerkzeug nach einem der Ansprüche 8 bis 14, **dadurch gekennzeichnet, dass** dem Vielfachschraubwerkzeug ein Hydraulikaggregat mit einer Hydraulikpumpe, mit einem Fluidtank, mit einem Fluiddruckausgang für den Vorhub und einen weiteren Fluiddruckausgang für den Rückhub und mit zumindest einer Durchflussmesseinrichtung sowie eine Steuereinheit zum Steuern des Hydraulikaggregates zugehörig ist, durch welche Steuereinrichtung bei einem Betrieb des Vielfachschraubwerkzeuges das Hydraulikaggregat Fluidfördermengen abhängig zwischen einer Vorhubförderung und einer Rückhubförderung umgeschaltet wird.

## Claims

1. Multiple screwdriver with a plurality of drive spindles (5), arranged annularly around a centre and able to be equipped or are equipped at the end side in each case with a clamping tool (8), and a ratchet drive, assigned to each drive spindle (5) and driven by means of a hydraulic piston drive, for driving the drive spindles (5), **characterised in that** the multiple screwdriver (1) comprises a feed unit (4) for inducing a rotary movement in the drive spindles (5), with an adjustment wheel (45) mounted in a rotatable manner about the axis of the centre of the annular arrangement of the drive spindles (5), as a drive wheel, which drives a respective output wheel (48) fitted on the drive spindle (5), wherein the drive movement of the adjusting wheel (45) is transmitted to the drive spindles (5) with the interconnection in each case of a torque limiter.

2. Multiple screwdriver according to claim 1, **characterised in that,** for the torque-limited force transfer of the drive force onto the drive spindles (5), the drive wheels (48) are located on the drive spindles with the interconnection of a slip clutch, and an outer tooth arrangement (47) of the adjustment wheel (45) meshes with a toothed wheel (49).

3. Multiple screwdriver according to claim 2, **characterised in that** the slip clutch of each drive spindle (5) comprises two clutch disks (50, 50.1) which are torque-locked on the drive spindle, with in each case a clutch surface, inclined opposite the longitudinal extension of the drive spindle (5), which clutch surfaces are inclined towards one another in order to form a drive wheel receiver, and the output wheel (48), which engages with its inner side, configured so as to be complementary to the clutch surfaces, into the output wheel receiver, and is in contact under preliminary tension with the clutch surfaces of the clutch disks (50, 50.1).

4. Multiple screwdriver according to claim 3, **characterised in that** the preliminary tension of the slip clutch is provided by a pressure spring (52) taking effect on a clutch disk (50.1).

5. Multiple screwdriver according to any one of claims 1 to 4, **characterised in that** the adjustment wheel (45) comprises a drive contour (46) for connecting a drive tool.

6. Multiple screwdriver according to any one of claims 1 to 5, **characterised in that** the feed unit (4) is configured as a module which can be detachably connected to a drive block (2) of the multiple screwdriver (1), and the components of the feed unit (4) are accommodated in a housing with an upper part and a lower part.

7. Multiple screwdriver according to claim 6, **characterised in that** the drive spindles (5) are mounted and held in a drive block (2), and comprise at each end a drive section (7, 7.1) projecting from the drive block (2), wherein the drive sections (7, 7.1) of the drive spindles (5) on the one side of the drive block (2) serve to carry the clamping tools (8), and that the feed unit (4) is connected to the other drive sections (7.1) of the drive spindles (5).

8. Multiple screwdriver according to claim 7, **characterised in that** in the drive block (2) the pistons (13.1) of the piston drives are guided in cylinder housings (15) in a translatory manner such as to be adjustable in both directions, wherein, in order to transfer a forwards stroke movement and a backwards stroke movement in each case onto a ratchet lever (14) comprising a driving claw (17), the piston rods (13) are connected kinematically to the ratchet lever (14), and the drive block (2) comprises in its centre region a fluid distribution cavity (18, 24), into which several fluid channels open, located in the drive block (2), wherein, through each fluid channel, a fluid connection is established between the fluid distribution cavity (18, 24) and a first fluid inlet of a cylinder housing (15), and that, on a flat side of the drive block (2), a fluid distributor (25) is arranged, with a ring channel (26) as a fluid distribution chamber, connected to a fluid delivery channel, into which fluid distribution channel several fluid channels open, wherein, through each fluid channel, a fluid connection is established between the fluid distribution cavity (26) and a second fluid inlet of a cylinder housing (15).

9. Multiple screwdriver according to claim 8, **characterised in that** the fluid distribution cavity, located in the centre region of the drive block (2), is configured as a ring channel (18, 24).

10. Multiple screwdriver according to claim 8 or 9, **characterised in that** the drive block (2) is composed of at least two block disks, wherein several ratchet drives are arranged in each block disk (6, 6.1).

11. Multiple screwdriver according to claim 8, **characterised in that** a fluid distribution cavity (18, 24) is assigned to each of the two block disks (6, 6.1), and the two fluid distribution cavities (18, 24) are brought into fluid connection with one another through a fluid distributor (19).

12. Multiple screwdriver according to any one of claims 8 to 11, **characterised in that** the drive spindles (5) carry spring-tensioning tools as tensioning tools, such as spring nuts (8).

13. Multiple screwdriver according to any one of claims 8 to 12, **characterised in that** the direction of movement of the piston rods (13) of the ratchet drives and the direction of movement of the ratchet lever (14) are arranged pointing in the same direction, and the ratchet lever (14) is driven directly by the piston rod (13).

14. Multiple screwdriver according to any one of claims 8 to 13, **characterised in that** the direction of movement of the piston rods of the ratchet drives and the direction of movement of the ratchet levers run at an angle to one another, in particular at a right angle or approximately at a right angle, and, in order to transfer the forwards stroke movement and the backwards stroke movement of a piston rod in each case onto a ratchet lever, a transfer lever is arranged between each piston rod and the ratchet lever driven by the piston rod, of which one end is connected by a joint connection to the piston rod, and the other end is connected by a joint connection to the ratchet lever.

15. Multiple screwdriver according to any one of claims 8 to 14, **characterised in that** the multiple screwdriver has assigned to it a hydraulic device, with a hydraulic pump, a fluid tank, with a fluid pressure outlet for the forwards stroke and a further fluid pressure outlet for the backwards stroke, and with at least one throughflow measuring device and a control unit for controlling the hydraulic device, by means of which control device, during the operation of the multiple screwdriver, the hydraulic device is switched between a forwards conveying stroke and a backwards conveying stroke, depending on the fluid quantities being conveyed.

## Revendications

1. Outil de vissage multiple comportant plusieurs broches d'entraînement (5) disposées en forme de cercle autour d'un centre, respectivement équipées ou pouvant être équipées à leur extrémité d'un outil de serrage (8) et avec, affecté à chaque broche d'entraînement (5), un mécanisme à cliquet destiné à entraîner les broches d'entraînement (5) par un mécanisme à piston hydraulique, **caractérisé en ce que** l'outil de vissage multiple (1) comprend une unité de distribution (4) destinée à induire un mouvement de rotation sur les broches d'entraînement (5) à l'aide d'une roue de commande (45), logée de manière rotative sur l'axe du centre de l'agencement circulaire des broches d'entraînement (5), faisant office de roue d'entraînement, laquelle entraîne une roue de sortie (48) logée sur la broche d'entraînement (5), la transmission du mouvement d'entraînement de la roue de commande (45) sur la broche d'entraînement (5) étant réalisée par l'intermédiaire d'un limiteur de couple.

2. Outil de vissage multiple selon la revendication 1, **caractérisé en ce que,** afin de transmettre sur les broches d'entraînement (5) la force d'entraînement avec limiteur de couple, les roues de sortie (48) sont logées sur les broches d'entraînement par l'intermédiaire d'un accouplement à glissement et s'engagent par une roue dentée (49) dans une denture extérieure (47) de la roue de commande (45).

3. Outil de vissage multiple selon la revendication 2, **caractérisé en ce que** l'accouplement à glissement de chaque broche d'entraînement (5) comprend la roue de sortie (48) et deux disques d'accouplement (50, 50.1) logés de manière solidaire en rotation sur la broche d'entraînement (5), comportant respectivement une surface d'accouplement inclinée par rapport à l'étendue longitudinale de la broche d'entraînement (5), lesquelles surfaces d'accouplement sont inclinées l'une vers l'autre afin de former un logement de roue de sortie, laquelle roue de sortie (48) s'engage par sa face intérieure, conformée de manière complémentaire par rapport aux surfaces d'accouplement, dans le logement de roue de sortie et est en appui avec précontrainte contre les surfaces d'accouplement des disques d'accouplement (50, 50.1).

4. Outil de vissage multiple selon la revendication 3, **caractérisé en ce que** la précontrainte de l'accouplement à glissement est mise à disposition par un ressort de compression (52) agissant sur un disque d'accouplement (50.1).

5. Outil de vissage multiple selon l'une des revendications 1 à 4, **caractérisé en ce que** la roue de commande (45) présente un contour d'entraînement (46) destiné au raccordement d'un outil d'entraînement.

6. Outil de vissage multiple selon l'une des revendications 1 à 5, **caractérisé en ce que** l'unité de distribution (4) est conformée en module amovible raccordable au bloc de transmission (2) de l'outil de vissage multiple (1) et que les pièces composant l'unité de distribution (4) sont logées dans un boîtier présentant une partie supérieure et une partie inférieure.

7. Outil de vissage multiple selon la revendication 6, **caractérisé en ce que** les broches d'entraînement (5) sont logées et maintenues dans un bloc de transmission (2) et présentent à chaque extrémité un tronçon d'entraînement (7, 7.1) en saillie par rapport au bloc de transmission (2), les tronçons d'entraînement (7, 7.1) des broches d'entraînement (5) servant sur un côté du bloc de transmission (2) à supporter les outils de serrage (8), et **en ce que** l'unité de distribution (4) est raccordée aux autres tronçons d'entraînement (7, 7.1) des broches d'entraînement (5).

8. Outil de vissage multiple selon la revendication 7, **caractérisé en ce que,** dans le bloc de transmission (2), les pistons (13.1) des mécanismes à piston sont guidés dans des corps de cylindre (15) de façon à pouvoir être déplacés en translation dans les deux directions, les tiges de piston (13) étant raccordées cinématiquement, afin de transmettre un mouvement d'avance et un mouvement de retour sur respectivement un levier à cliquet (14) présentant une griffe de toc d'entraînement (17), avec le levier à cliquet (14), et lequel bloc de transmission (2) présente dans sa zone centrale au moins une cavité de répartition de fluide (18, 24), dans laquelle débouchent plusieurs canaux de fluides se trouvant dans le bloc de transmission (2), chaque canal de fluide assurant une liaison de fluide entre la cavité de répartition de fluide (18, 24) et une première arrivée de fluide d'un corps de cylindre (15), et **en ce qu'**un répartiteur de fluide (25), est disposé sur un côté plan du bloc de transmission (2) et comporte un canal circulaire (26), faisant office de cavité de répartition de fluide, raccordé à un canal d'acheminement de fluide, dans laquelle cavité de répartition de fluide débouchent plusieurs canaux de fluide, chaque canal de fluide assurant une liaison de fluide entre la cavité de répartition de fluide (26) et une seconde arrivée de fluide d'un corps de cylindre (15).

9. Outil de vissage multiple selon la revendication 8, **caractérisé en ce que** la cavité de répartition de fluide se trouvant dans la zone centrale du bloc de transmission (2) est conformée en canal circulaire (18, 24).

10. Outil de vissage multiple selon la revendication 8 ou 9, **caractérisé en ce que** le bloc de transmission (2) est assemblé à partir d'au moins deux disques de bloc, plusieurs mécanismes à cliquet étant disposés dans chaque disque de bloc (6, 6.1).

11. Outil de vissage multiple selon la revendication 8, **caractérisé en ce qu'une** cavité de répartition de fluide (18, 24) est affectée à chacun des deux disques de bloc (6, 6.1) et les deux cavités de répartition de fluide (18, 24) sont mises en liaison de fluide grâce à un répartiteur de fluide (19).

12. Outil de vissage multiple selon l'une des revendications 8 à 11, **caractérisé en ce que** les broches d'entraînement (5) supportent, en guise d'outils de serrage, des outils de serrage à ressort, par exemple des embouts à ressort (8).

13. Outil de vissage multiple selon l'une des revendications 8 à 12, **caractérisé en ce que** le sens de déplacement des tiges de piston (13) des mécanismes à cliquet et le sens de déplacement des leviers à cliquet (14) sont conformés pour aller dans la même direction et le levier à cliquet (14) est directement entraîné par la tige de piston (13).

14. Outil de vissage multiple selon l'une des revendications 8 à 13, **caractérisé en ce que** le sens de déplacement des tiges de piston des mécanismes à cliquet et le sens de déplacement des leviers à cliquet forment un angle l'un par rapport à l'autre, notamment un angle droit ou sensiblement droit et que, pour transmettre le mouvement d'avance et le mouvement de retour d'une tige de piston sur respectivement un levier à cliquet, est disposé entre chaque tige de piston et le levier à cliquet actionné par cette dernière, un levier de conversion raccordé par l'une de ses extrémités par une articulation à la tige de piston et par l'autre de ses extrémités par une articulation au levier à cliquet.

15. Outil de vissage multiple selon l'une des revendications 8 à 14, **caractérisé en ce qu'un** groupe hydraulique, doté d'une pompe hydraulique avec un réservoir de fluide, avec une sortie de fluide sous pression pour l'avance et une sortie supplémentaire de fluide sous pression pour le retour et avec au moins un dispositif de mesure du débit ainsi qu'une unité de commande pour piloter le groupe hydraulique est affecté à l'outil de vissage multiple, grâce à laquelle unité de commande le groupe hydraulique est commuté lors du fonctionnement de l'outil de vissage multiple en fonction des quantités de fluide débitées, entre un débit d'avance et un débit de retour.
